Europäisches Patentamt

European Patent Office

Office européen des brevets

(19)

(11) **EP 0 677 228 B1**

(12) **FASCICULE DE BREVET EUROPEEN**

(45) Date de publication et mention
de la délivrance du brevet:
**21.10.1998   Bulletin 1998/43**

(21) Numéro de dépôt: **94902809.6**

(22) Date de dépôt: **14.12.1993**

(51) Int Cl.6: **H04N 5/44**

(86) Numéro de dépôt international:
**PCT/FR93/01243**

(87) Numéro de publication internationale:
**WO 94/16522 (21.07.1994 Gazette 1994/17)**

(54) **PROCEDE DE DESENTRELACEMENT DE TRAMES D'UNE SEQUENCE D'IMAGES ANIMEES**

VERFAHREN ZUM ENTSCHACHTELN VON HALBBILDERN IN EINER SICH BEWEGENDEN
BILDFOLGE

METHOD FOR DE-INTERLACING FIELDS OF A SEQUENCE OF MOVING IMAGES

(84) Etats contractants désignés:
**DE FR GB IT NL**

(30) Priorité: **30.12.1992  FR 9215918**

(43) Date de publication de la demande:
**18.10.1995   Bulletin 1995/42**

(73) Titulaire: **THOMSON multimedia
92648 Boulogne Cédex (FR)**

(72) Inventeurs:
 • **SALMON, Philippe
  F-92402 Courbevoie Cédex (FR)**
 • **CHUPEAU, Bertrand
  F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**WO-A-91/20155          WO-A-92/17983
FR-A- 2 532 501          FR-A- 2 604 049**

 • **IEEE TRANSACTIONS ON CONSUMER
   ELECTRONICS vol. 38, no. 3 , Août 1992 , NEW
   YORK US pages 145 - 149 KWON ET AL. 'A
   Motion-Adaptive De-Interlacing Method'**
 • **BBC RESEARCH DEPARTMENT REPORT no. 11
   , Septembre 1987 , TADWORTH GB pages 1 - 20
   THOMAS 'Television Motion Measurement for
   DATV and Other Applications'**
 • **SIGNAL PROCESSING OF HDTV; 29
   FEBRUARY-2 MARCH 1988; L'AQUILA, IT pages
   393 - 399 FERNANDO ET AL. 'Motion
   Compensated Display Conversion'**
 • **COLLOQUE HDTV 90; 25-29 JUIN 1990;
   OTTAWA, CA pages 3B.3.1 - 3B.3.19 DUBOIS ET
   AL. 'Review of Techniques for Motion Estimation
   and Motion Compensation'**

## Description

La présente invention concerne un procédé de désentrelacement de trames d'une séquence d'images animées. Elle s'applique notamment à la conversion de formats d'images de télévision.

Le format usuellement utilisé en télévision est dit à balayage "entrelacé", c'est-à-dire qu'alternativement une "trame" constituée seulement des lignes paires ou des lignes impaires de l'image est transmise au lieu de l'image entière. Cette diminution par deux de la quantité d'informations à transmettre a lieu cependant au détriment de la qualité des images, et ceci est d'autant plus sensible lorsqu'il s'agit d'images animées. L'invention réside en un procédé de conversion du format de balayage "entrelacé" vers le format naturel dit "progressif" ou "séquentiel" où la totalité des lignes est présente à chaque image. L'objectif visé est de reconstruire à partir d'une séquence d'images sources entrelacées une séquence d'images progressives de qualité visuelle aussi proche que possible de ce que peut être une séquence d'images sources progressives idéale, n'ayant jamais été entrelacée.

Les techniques de reconstruction existantes peuvent être classées en quatre catégories suivant qu'elles font appel à des filtrages linéaires, adaptées en mouvement, non-linéaires non-compensées en mouvement ou compensées en mouvement. Parmi les techniques de filtrage linéaire, le filtrage temporel pur inter-trames est idéal pour les séquences à très faible mouvement, mais il produit rapidement des artefacts très visibles dès que la scène s'anime, essentiellement aux contours des objets en mouvement qui ont tendance à se dédoubler (fantômes d'objets). Le filtrage linéaire pur intra-trame (ou vertical) ne produit jamais d'artefacts aussi gênants et est donc choisi de préférence pour les séquences en mouvement important mais en revanche la résolution de l'image ainsi désentrelacée reste limitée par principe et certains effets de repliement spectral (phénomène de marches d'escalier" sur les contours diagonaux) sont insuppressibles. De fait un compromis linéaire spatio-temporel ne peut que cumuler les défauts des deux types de filtrage. Le filtrage adapté au mouvement consiste à basculer entre divers modes de filtrage linéaire à l'intérieur d'une même image en fonction du mouvement en optant pour un filtrage temporel pur pour les faibles mouvements, un filtrage spatial pur pour les mouvements élevés et un filtrage spatio-temporel pour les mouvements intermédiaires. Indépendamment des problèmes de visibilité de commutation entre les divers modes, les problèmes intrinsèques du filtrage linéaire pour les séquences en mouvement ne sont pas résolus.

De nombreuses techniques de filtrage non-linéaires ont été proposées, parmi lesquelles les plus connues sont fondées sur le principe du filtrage médian, pour améliorer le désentrelacement sans estimer le mouvement dans la scène représentée. Mais les résultats obtenus restent assez médiocres. Il est communément admis que seules des techniques compensées en mouvement, c'est-à-dire allant chercher l'information manquante dans les images adjacentes, précédentes et suivantes, dans la direction du mouvement des objets de la scène, permettent des conversions de formats spatio-temporels sans dégradation. FR-A-2 604 049 décrit une technique de désentrelacement tenant compte du mouvement estimé de blocs de pixels. Il apparaît en effet que seule une connaissance précise du mouvement peut permettre d'adapter les conversions au spectre spatio-temporel des images animées. Plusieurs approches allant dans ce sens, fondées sur une compensation du mouvement sont connues, essentiellement dans les publications faites dans le cadre du projet européen RACE II "Transit". Mais le problème majeur qui n'est pas encore résolu est celui du contrôle d'un mode de repli, rendu nécessaire par les inévitables erreurs d'estimation du mouvement inter-images.

Le but de l'invention est de pallier les inconvénients précités.

A cet effet l'invention a pour objet un procédé de désentrelacement de trames d'une séquence d'images animées composées de trames de parité d'un premier type entrelacées avec des trames de parité d'un deuxième type tel que défini dans la revendication 1.

L'invention a pour principal avantage qu'elle peut être appliquée efficacement à tout dispositif de télévision numérique comportant une conversion de formats de balayage entrelacé vers un balayage progressif.

En télévision conventionnelle le format entrelacé suit la recommandation 601 du CCIR (norme "4:2:2", 625 lignes à 50 Hz ou 525 lignes à 60 Hz, rapport 4/3). L'approche européenne vers la TVHD a fixé un certain nombre de sigles pour d'autres formats :

- EDI (Enhanced Definition Interlated) : 625 lignes, entrelacé, 16/9
- EDP (Enhanced Definition Progressive) : 625 lignes, progressif, 16/9
- HDI (High Definition Interlaced): 1250 lignes, entrelacé, 16/9
- HDP (High Definition Progressive) : 1250 lignes, progressif, 16/9

Les conversions EDI vers EDP et HDI vers HDP sont de simples désentrelacements et peuvent être des applications directes du procédé selon l'invention. Mais d'autres dispositifs de conversion peuvent également faire appel au procédé de désentrelacement selon l'invention au sein d'une chaîne plus complexe de traitements. Il peut en être ainsi par exemple de la conversion 4:2:2 vers EDP qui fait appel à un désentrelacement et une conversion de rapport d'image 4/3 vers 16/9 ; de la "upconversion" temporelle 50 Hz HDI vers 100 Hz HDI qui peut être effectuée en cascadant un désentrelacement de qualité et la génération de deux trames entrelacées à partir d'une image HDP intermédiaire, la qualité d'image ainsi obtenue étant ainsi largement supérieure à la classique répétition de trames dite AABB et enfin de la génération de ralenti d'images obtenue par répétition d'images bien désentrelacées suivie d'un réentrelacement de la séquence ainsi ralentie, qui donne une bien meilleure qualité visuelle que la classique répétition de trames entrelacées.

Ces conversions de formats d'images de télévision ont toutes pour but d'améliorer la qualité de l'image proposée au spectateur. Les dispositifs correspondants peuvent être envisagées dans un environnement professionnel (studio de télévision) où une très bonne qualité d'image est exigée. Elles peuvent être également envisagées dans un environnement "consommateur" (récepteur) où le facteur limitant est l'intégration à faibles coûts de dispositifs complexes d'estimation de mouvement.

Les dispositifs de conversion de haute qualité de l'image vidéo vers un support film qui requièrent un désentrelacement performant peuvent également mettre en oeuvre le procédé selon l'invention. Une telle conversion est en effet constituée des étapes suivantes: conversion HDI/HDP, réduction de bruit, conversion temporelle 50 Hz vers 25 Hz (la cadence film est de 24 images/s) impression sur la pellicule.

Le procédé selon l'invention peut également trouver une application aux dispositifs de conversion d'images des formats vidéo numériques entrelacés vers les formats d'affichages sur les écrans de stations de travail informatiques (qui sont tous à balayage progressif) ainsi qu'à la majorité des procédés de traitement de séquences d'images animées qui traitent de façon beaucoup plus performante et plus simplement une séquence progressive qu'une séquence entrelacée. Mais un désentrelacement de qualité en tête, suivi d'un traitement dans le cadre progressif est alors souhaitable. Ce peut être le cas par exemple de la compression d'image par les techniques de codage en sous-bandes ou celui de toutes les conversions de fréquence image (telle la conversion de standards 50 Hz/60 HZ).

D'autres caractéristiques et avantages de l'invention apparaîtront à l'aide de la description qui suit faite en regard des figures annexées qui représentent :

- La figure 1 une séquence d'images au format entrelacé en opposition avec une séquence d'images au format séquentiel ou progressif.
- La figure 2 le procédé selon l'invention sous la forme d'un schéma synoptique globale.
- La figure 3 le processus d'interpolation par filtrage passe-bas vertical mis en oeuvre dans le procédé selon l'invention pour estimer les lignes d'une image progressive.
- La figure 4 le mode d'interpolation compensé par le mouvement ,mis en oeuvre pour estimer les lignes d'une image progressive.
- La figure 5 un schéma illustrant une construction selon le procédé de l'invention d'une trame manquante pour obtenir une image progressive entre deux trames consécutives de même parité.
- La figure 6 une grille de projection de vecteurs mouvements définie d'images sources.
- La figure 7 des exemples de vecteurs mouvements et de leurs équivalents projetés.
- La figure 8 un exemple de construction d'une image désentrelacée.
- La figure 9 un exemple de réalisation d'un post filtrage passe-bas vertical.

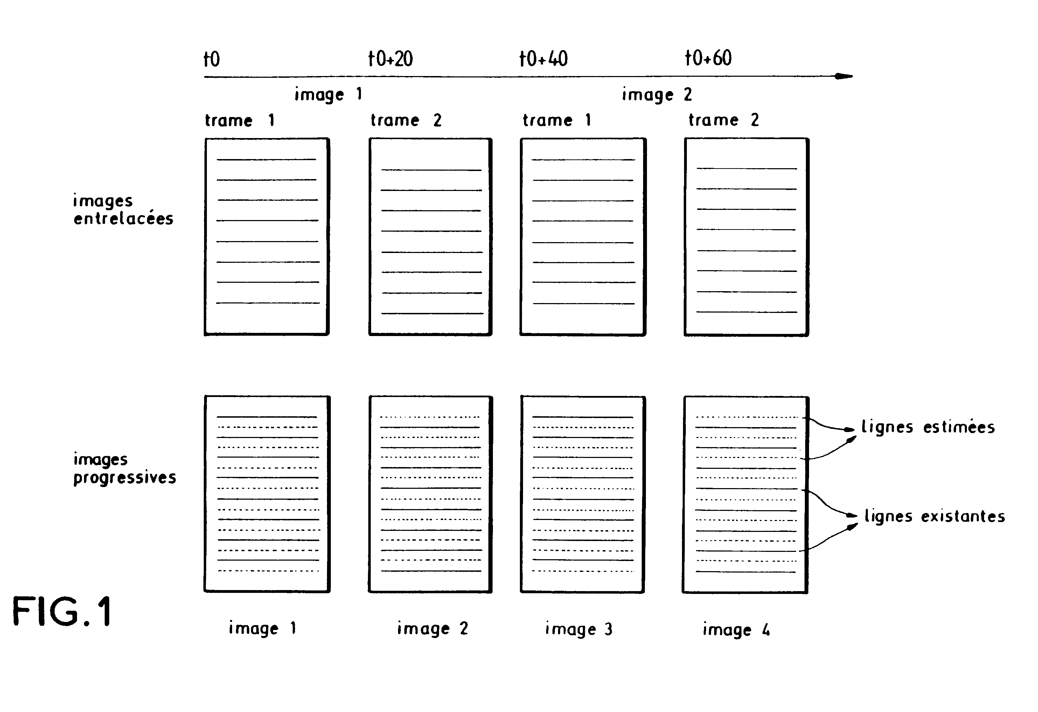

Dans l'exemple qui est représenté à la figure 1 la séquence d'images entrelacées est figurée dans la partie supérieure du schéma par la suite de trames impaires, désignées par "trame 1", entrelacées avec des trames paires, désignées par "trame 2". Dans cette enchaînement les trames impaires et paires se suivent avec une récurrence de 40 ms. Elles sont figurées pour les trames impaires aux instants $t_o$ et $t_o + 40$ et elles sont figurées pour les trames paires aux instants $t_o + 20$ et $t_o + 60$. La séquence d'images progressives est figurée dans la partie inférieure du schéma par une suite d'images désignées par image 1", "image 2" "image 3" et "image 4" en correspondance respectivement sur le schéma avec les trames de la partie supérieure. Le procédé selon l'invention permet, à partir d'une séquence d'images au format entrelacé, qui ne présente que la moitié des lignes totales à chaque instant d'image en étant formé alternativement de lignes paires et impaires; d'interpoler les lignes manquantes, de façon à obtenir la séquence correspondante au bas du schéma au format séquentiel ou progressif de la meilleure qualité possible.

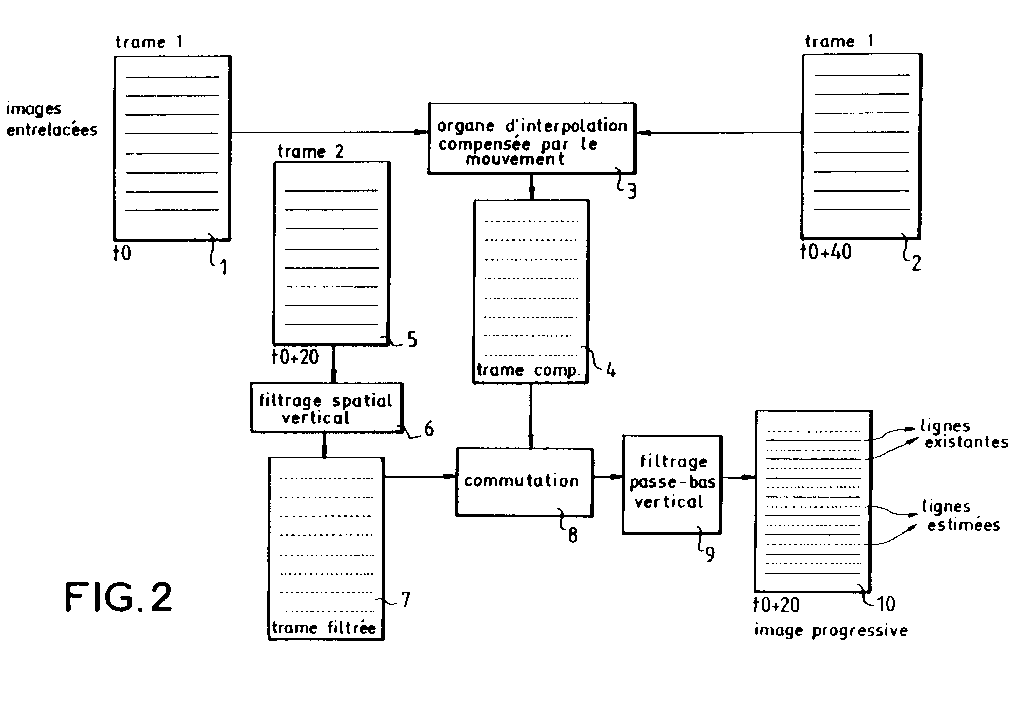

Le désentrelacement selon l'invention a lieu, de la façon représentée à la figure 2, selon deux modes opératoires. L'un principal met en oeuvre une compensation de mouvement, l'autre qui sert de mode de repli, met en oeuvre un simple filtrage linéaire vertical intra-trame. Suivant le mode principal, les images entrelacées définies par les trames impaires aux instants marqués $t_o$ et $t_o + 40$ ms et portant les références 1 et 2 sur la figure 2 sont appliquées à un organe d'interpolation 3 qui est compensé en mouvement. Ce dernier fournit une trame fictive 4 compensée en mouvement estimée à l'instant $t_o + 20$ ms.

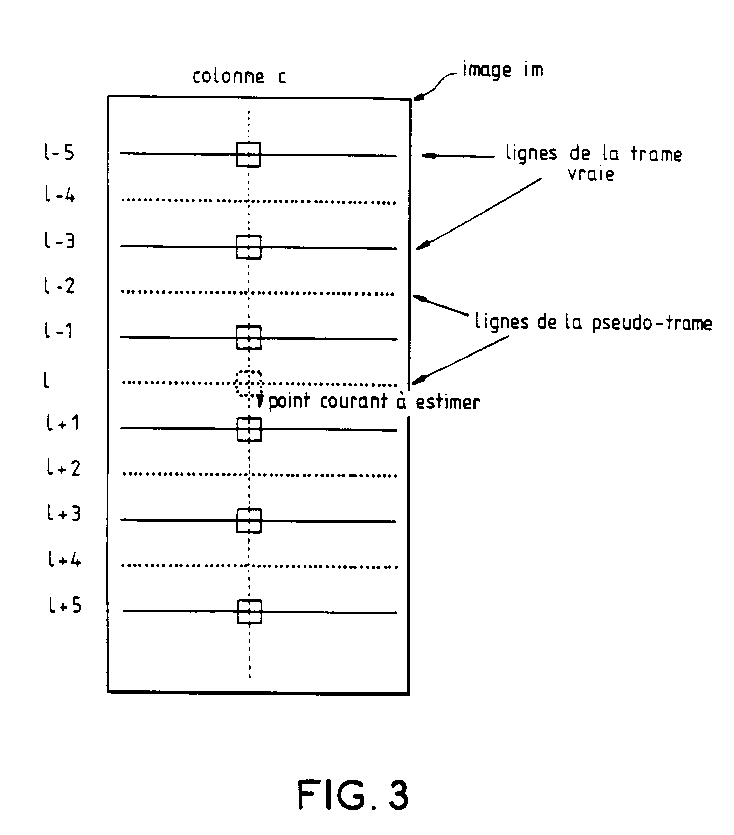

Dans le mode de repli chaque trame paire d'un instant $t_o + 20$ ms et portant la référence 5 sur la figure 2, est filtrée par un filtre spatial vertical 6 réalisé de la manière représentée à la figure 3 en appliquant des coefficients de pondération sur chaque pixel homologue du point courant sur un nombre déterminé de lignes au-dessus et en-dessous du point courant. Sur la figure 3 le point courant à estimer est dispersé au croisement d'une colonne c et d'une ligne I. Les points considérés sur les lignes situées de part et d'autre du point courant sont déposés au croisement de la colonne c passant par le point le courant et des lignes l-5, l-1, l+1, l+3 et l+5. Le filtrage est obtenu en appliquant par exemple au signal de luminance de chacun des points considérés des coefficients de pondération (3, -25, 150, 150, -25, 3). L'estimation du signal de luminance $i_m(l, c)$ du point courant, est le résultat de la somme pondérée des signaux de luminance $(i_m(l-5, c)...i_m(l+5, c)$ des points situés de part et d'autre du point courant sur la même colonne divisée par un coefficient de valeur déterminée égale à 256 par exemple. Cette opération de filtrage est décrite par la relation :

$$i_m(l, c) = (150*((i_m(l - 1), c) + i_m(l + 1, c))$$

$$-25*((i_m(l - 3), c) + i_m(l + 3, c))$$

$$+3*((i_m(l - 5, c) + i_m(l + 5, c))/256.$$

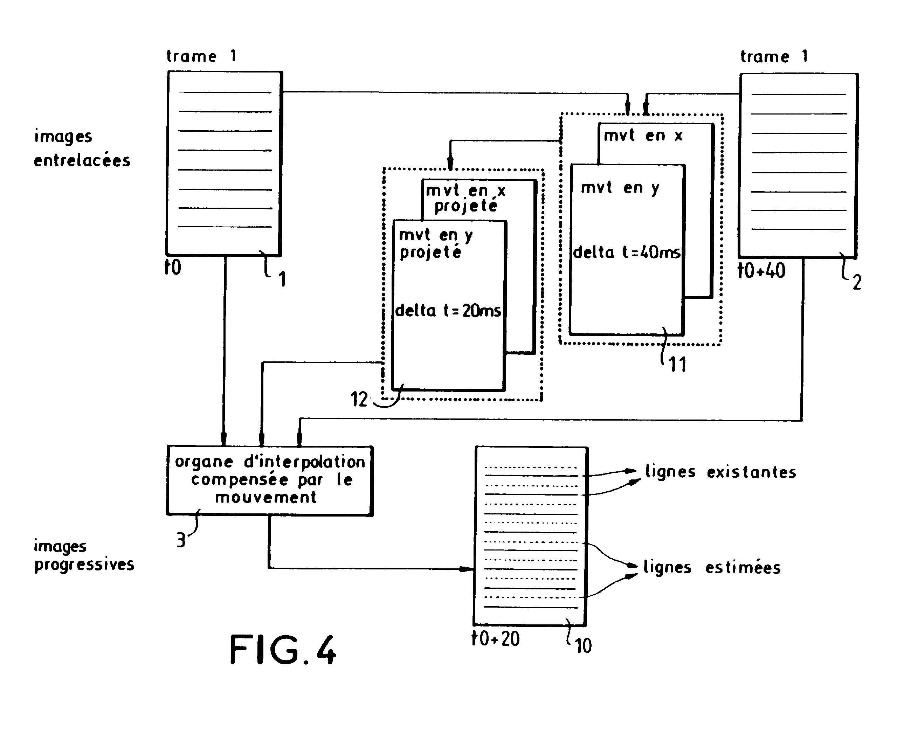

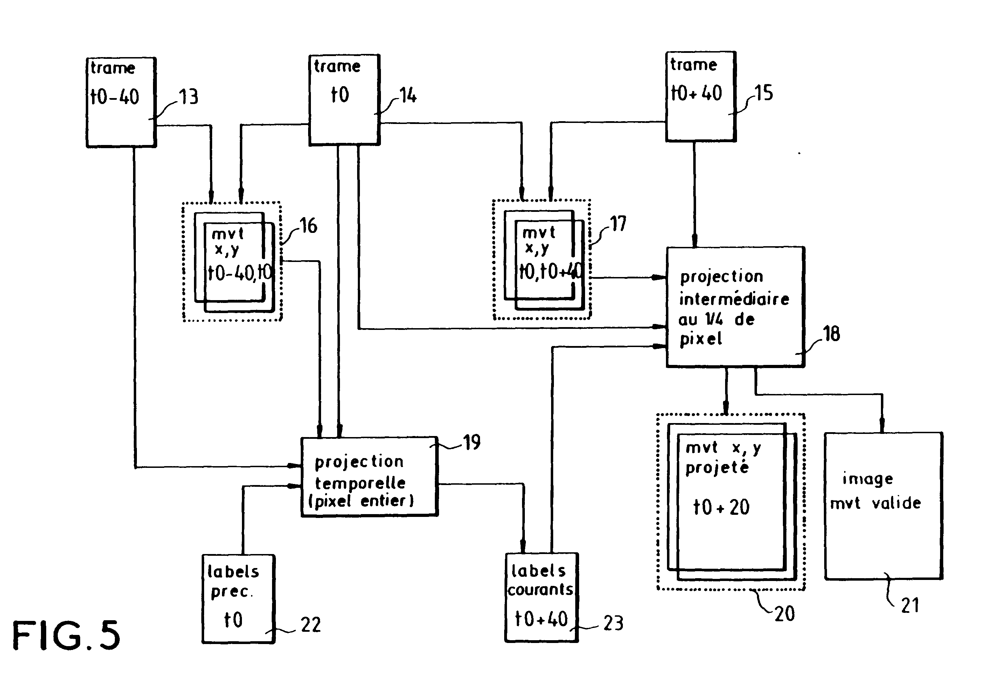

Dans le mode compensé en mouvement qui est représenté par la schéma de la figure 4 où les éléments homologues à ceux de la figure 2 sont représentés avec les mêmes références, les séquences de champs de vecteurs mouvement, décrivant le mouvement en X et en Y entre trames sources de même parité (distances de 40 ms), sont utilisées. Ces vecteurs sont définis en chaque pixel des trames sources et leur précision de déplacement est au demi-pixel. Dans les blocs 11 et 12 le champ de vecteurs mouvement défini entre les trames sources aux instants t et t + 40ms est utilisé pour construire la trame manquante dans l'image progressive à l'instant t + 20 ms. L'assignation des vecteurs, définis sur la trame source de l'instant t + 40 ms, à la trame manquante de l'image à de l'instant t + 20 ms est obtenue par projection temporelle du champ dans sa direction de la manière représentée par les blocs 13 à 23 de la figure 5. Cette projection ne peut avoir lieu cependant que sous certains conditions pour tenir compte du fait qu'il est préférable de ne pas utiliser les vecteurs correspondant à des parties de la scène présentes à l'instant à t + 40 ms mais absentes à l'instant t, car ayant été entre temps découvertes par des objets en premier plan qui les masquaient auparavant. Les vecteurs estimés par mise en correspondance des points images des instants t et t + 40 ms ne peuvent par principe représenter correctement le mouvement dans ces zones particulières. La méthode de projection temporelle mise en oeuvre dans le bloc 19 est celle décrite dans la demande de brevet FR-A- 2 675 002. Elle associe aux champs de vecteurs des images d'étiquettes (ou "labels" 22, 23) décrivant les occlusions et les zones découvertes de l'image. Une image des labels est construite par projection temporelle du mouvement précédent des instants (t - 40, t), (pour la trame identique). Cette image de labels courant est composée de trois niveaux :

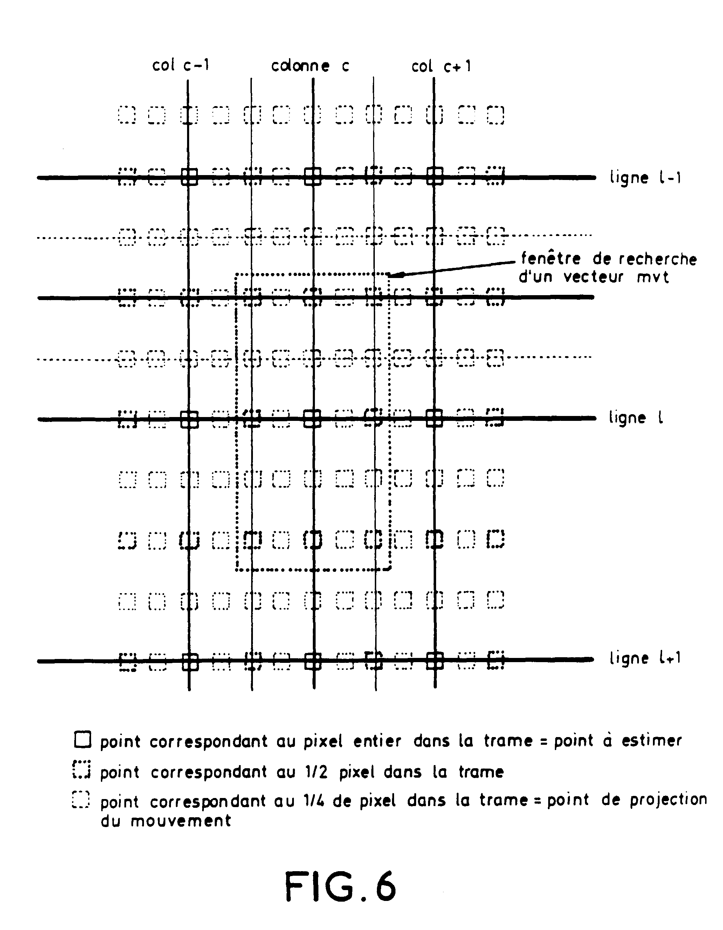

- un niveau de vecteurs "normaux"
- un niveau de vecteurs "occluants": appartenant à des objets masquant une partie de la scène entre les instants t et t + 40 ms

et un niveau de vecteurs "découverts": appartenant à des parties de la scène découvertes entre t et t + 40 ms. La projection du mouvement correspondant à l'instant (t + 20) est réalisée à partir de l'image mouvement obtenue à partir des instant (t et t + 40) et de l'image de labels courants. La projection des vecteurs mouvement le long de leur trajectoire sur la trame milieu a lieu par une division par 2 de leurs composantes de déplacement en X et en Y: le vecteur déplacement de composantes (dX, dY) assigné au point (X, Y) de la trame à l'instant t + 40 est projeté au point (X - dX/2, Y - dY/2) de la trame d'instant t + 20. Comme le mouvement est estimé avec une précision du demi-pixel dans les trames sources, la projection obtenue a une précision du 1/4 de pixel. Elle a lieu de la manière représentée à la figure 6 sur une grille de définition 4 fois plus grande en X et en Y que l'image mouvement d'origine. Comme il peut y avoir plusieurs vecteurs aboutissant à la même projection et comme certains points peuvent ne pas avoir de vecteurs projetés, une image ternaire de validité du mouvement est générée parallèlement à la projection. Cette image comporte un indicateur 0 pour signaler l'absence de vecteur projeté, un indicateur 1 pour signaler la présence d'un vecteur fiable projeté au point à interpoler, et un indicateur pour signaler la présence d'un vecteur peu fiable. Cette image a la même taille qu'une des images du mouvement projeté et elle est initialisée à 0 (absence de projection en ce point). L'indicateur est placé à 1 lors de la projection d'un premier vecteur (mouvement valide en ce point). Une gestion des conflits est à mettre en oeuvre pour la projection éventuelle d'autres vecteurs en ce même point. Lors de la projection, un seul vecteur projeté par pixel est autorisé. En cas de conflit, 2 cas peuvent se présenter suivant que les vecteurs sont similaires ou différents.

Si les vecteurs sont des vecteurs similaires, c'est le vecteur qui rend minimale la différence inter-image déplacée DFD initiale qui est conservée. L'indicateur reste alors dans l'état 1 en ce point. Si les vecteurs sont totalement différents, l'indicateur de validité est placé dans l'état 2 en ce point. Le test de similitude est calculée par les relations

$$\text{écart} = \text{sqrt} (ex*ex + ey*ey)$$

avec

$$ex = vx1 - vx2 \text{ et } ey = vy1 - vy2,$$

vx1, vx2, vy1, vy2 représentant les différents vecteurs mouvement candidats si "écart" est plus grand qu'une valeur de seuil déterminée, égale à 3 par exemple, les vecteurs sont déclarés différents et le mouvement est déclaré invalide.

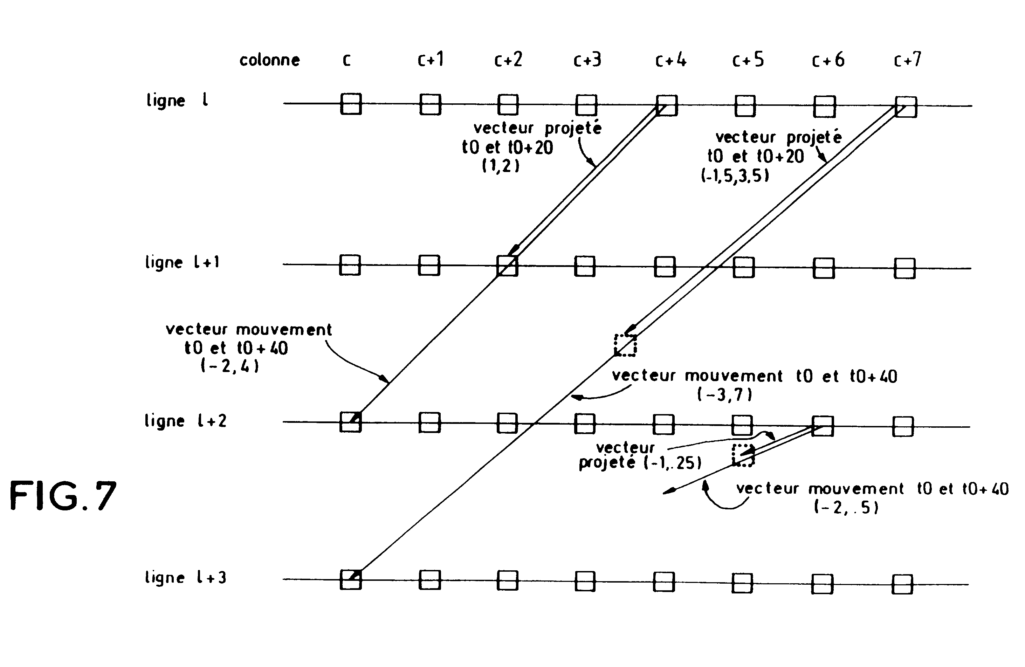

En fin de projection, un balayage de l'image des vecteurs projetés est effectué pour forcer dans l'état 2 l'indicateur de validité dans le cas où il existe des vecteurs non similaires dans un bloc de dimensions déterminées 3*3 par exemple, centré sur le point à tester. Le test de similitude est le même que ci-dessus, mais cette fois une valeur de seuil supérieure, égale à 4 par exemple est utilisée pour le paramètre seuil. Ceci permet d'obtenir en fin de projection, sur une grille 4 fois plus grande en X et en Y, de 0 ou 1 vecteur projeté et d'un indicateur de validité positionné à 0, 1 ou 2. La figure 7 présente des exemples de vecteurs mouvement et leurs équivalents projetés dans la grille comportant 8 colonnes et 4 lignes.

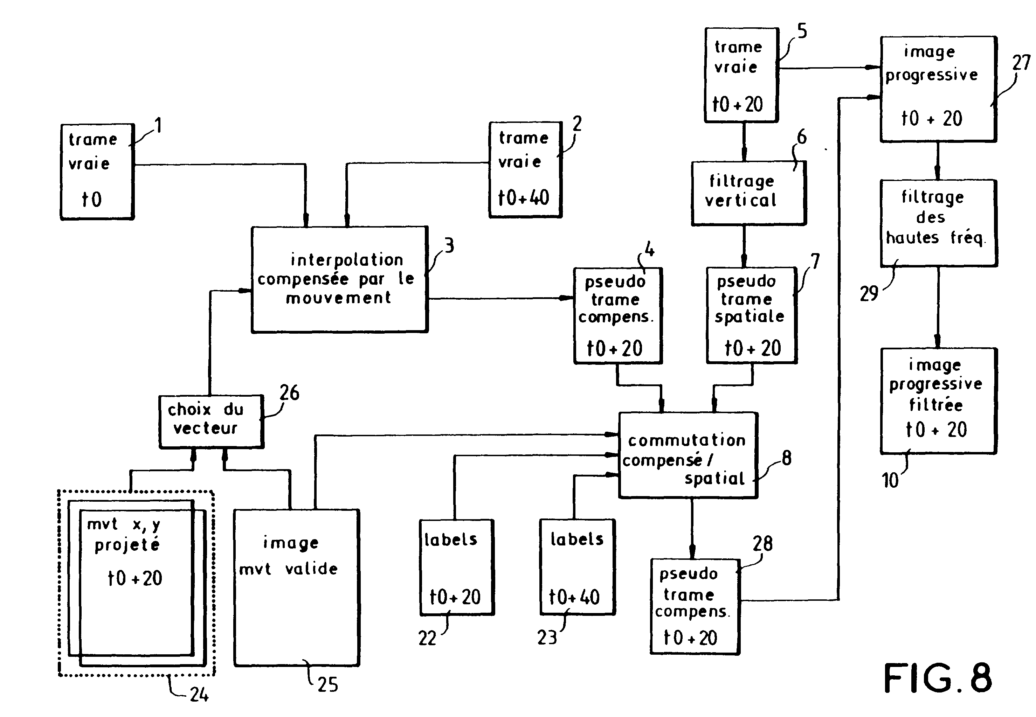

La reconstruction de la trame manquante à l'instant t + 20 s'effectue à partir des trames des instants t et t + 40 et du champ de mouvement entre les instants t et t + 40 projeté pour obtenir le champ de mouvement dans la trame de l'instant t + 20 de la manière représentée à la figure 8 où les éléments homologues à ceux de la figure 2 sont représentés avec les mêmes références. Le champ de mouvement projeté à l'instant $t_o$ + 20 est mémorisé dans le bloc 24 de la figure 8. Pour chaque vecteur déplacement de composante horizontale' DX et verticale DY d'un vecteur projeté en un point (X, Y) de la trame d'instant $t_o$ + 20 à créer, la valeur interpolée correspondante de luminance et de chrominance est obtenue en calculant la moyenne des valeurs trouvées aux points de coordonnées

$$\left( X + \frac{DX}{2}, Y + \frac{DY}{2} \right)$$

dans la trame source de l'instant $t_o$+40 et au point de coordonnées

$$\left( X - \frac{DX}{2}, Y - \frac{DY}{2} \right)$$

dans la trame source à l'instant $t_o$.

Pour chaque point à estimer il faut regarder à l'intérieur d'une fenêtre de + 2 pixels en X et en Y par exemple centrée autour du point, s'il existe un ou plusieurs vecteurs projetés. Quatre possibilités peuvent se présenter. S'il n'y a aucun vecteur projeté dans l'environnement, le point interpolé est calculé avec un vecteur nul et l'indicateur de validité est placé à l'état 0.

S'il n'y a qu'un seul vecteur dans l'environnement consulté et qu'il n'y a aucun mouvement invalide dans l'environnement du point, un point reconstruit est calculé à l'aide de ce vecteur et l'indicateur de validité est placé dans l'état 1 pour ce point.

S'il y a plusieurs vecteurs disponibles et qu'il n'existe aucun point de mouvement invalide dans l'environnement, une sélection a lieu par un test de leur différence inter image déplacée DFD et l'indicateur de validité est maintenu à l'état 1 en ce point.

S'il y a un ou plusieurs vecteurs mouvements invalides dans l'environnement, l'indicateur de validité est forcé pour prendre l'état 2 en ce point.

Sur la figure 8 les indicateurs de validité sont mémorisés dans le bloc 25 et le choix des vecteurs est effectué par le bloc 26, qui transmet les vecteurs au bloc d'interpolation 3. Cette disposition permet de disposer d'une trame interpolée dans la direction du mouvement doublée d'une image ternaire d'indicateur de validité du vecteur utilisé. Comme sur la figure 2, un filtrage vertical 6 effectué sur une trame vraie à un instant $t_o$ + 20 et un bloc d'interpolation 3 permettent de disposer de deux pseudo trames interpolées respectivement représentées par les blocs 7 et 4. Le choix entre ces deux pseudo trames est effectué pour chaque pixel par le bloc de commutation 8. Globalement, la pseudo trame interpolée compensée par le mouvement est de meilleure qualité sur la majeure partie de la trame que la pseudo trame issue du filtrage vertical qui dispose d'une qualité moindre mais qui présente cependant l'avantage d'être homogène sur toute la trame en ne présentant pas de disparité locale. La pseudo trame filtrée verticale 7 représente le mode de repli nécessaire aux défaillances de la pseudo trame compensée. L'expérience montre que le mode spatial est préférable au mode compensé dans les zones litigieuses où les vecteurs mouvements trouvés s'avèrent être faux. Le défaut introduit dans ce cas apparaît beaucoup plus visible qu'en utilisant le mode de repli car il donne en général des zones striées liées à l'alternance lignes de la trame vraie et une mauvaise estimation dans les lignes de la trame compensée. De plus les défauts dus à une mauvaise compensation sont d'autant plus visibles que l'amélioration apportée à l'image en général met en relief des défauts résiduels de façon plus criarde encore.

Aussi pour marier la trame vraie 5 de l'instant to + 20 avec une pseudo trame des modes "compensé ou spatial" le bloc de commutation 8 initialise une pseudo trame résultat 27 par une pseudo trame 28 issue du mode compensé, et il effectue des basculements dans le mode spatial pour les pixels qui suivent lorsque l'indicateur de validité correspondant dans le bloc 25 est dans l'état 0 (pas de vecteur), ou lorsque l'indicateur de validité du bloc 25 est dans l'état 2 indiquant que le vecteur est peu fiable, en élargissant dans ce cas le passage en mode spatial aux pixels adjacents en ligne et colonne, ou que le point courant se trouve dans une zone à majorité découverte dans l'image des labels 23 associée à la trame source à l'instant t + 40 et l'image des labels 22 associée à la trame source de l'instant $t_0$+ 20.

Cette mesure a lieu par simple comptage de pixels dans un bloc de dimension déterminée, 5*5 par exemple, centré sur le point courant. Le pixel est alors forcé dans le mode spatial si sur l'une ou l'autre des images labels courante et précédente il y a un nombre déterminé de pixels, 7 par exemple sur les 25 possibles de l'exemple classés en zones découvertes dans le bloc.

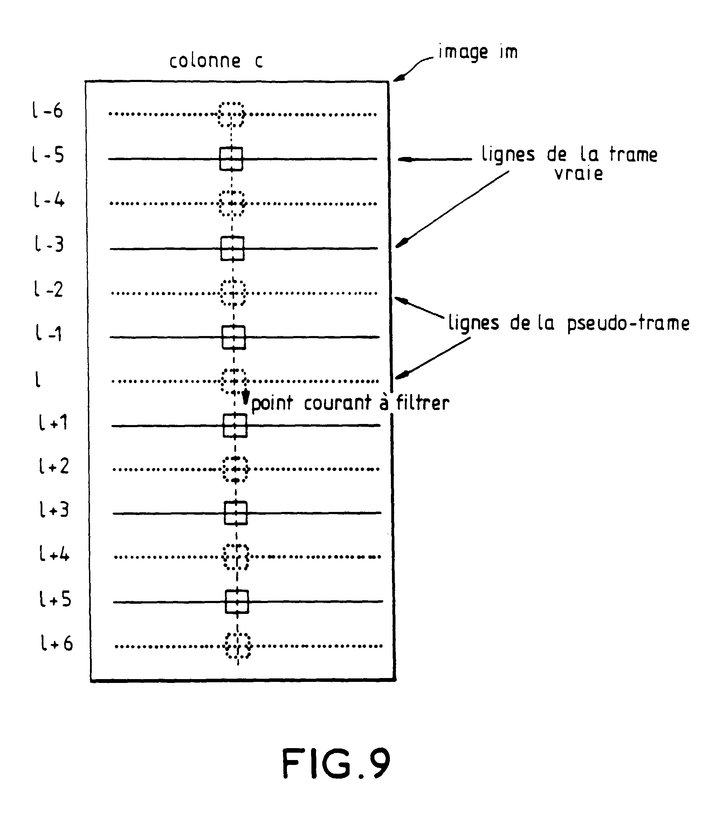

Enfin, comme représenté à la figure 9 un filtrage haute fréquence 29 est effectué sur les lignes de l'image progressive 27 obtenue, afin d'atténuer les effets dus à des hautes fréquences. Ce filtrage est réalisé par un filtre passe bas vertical sur les images entrelacées. Sur la figure 9 les coefficients utilisant ce filtrage ont respectivement les valeurs

(-4, 8, 25, -123, 230, 728, 230, -123, 25, 8, -4)/1000

Ce filtrage permet d'atténuer l'effet de peigne qui peut apparaître sur certaines séquences.


## Revendications

1. Procédé de désentrelacement d'une séquence d'images animées composées de trames de parité d'un premier type (1, 2) entrelacées avec des trames de parité d'un deuxième type (5), réalisant une estimation de mouvement entre la trame précédente (to) et la trame courante de même parité (to + 40 ms) pour attribuer un champ de vecteurs mouvement à la trame précédente (to), réalisant une projection (18) dans leur direction, sur une trame intermédiaire (to + 20 ms) à construire ou pseudo-trame, des vecteurs mouvement de la trame précédente (to), le procédé consistant :

   - à attribuer un vecteur à un pixel de la pseudo-trame intermédiaire à créer si le nombre de projections des vecteurs sur cette pseudo-trame et dans un environnement prédéfini du pixel est supérieur ou égal à un, et si, lorsque ce nombre est supérieur à un, l'écart angulaire entre les vecteurs mouvement relatifs à ces projections est inférieur à un seuil,
   - à calculer ce vecteur, lorsque attribué, en fonction du ou des vecteurs relatifs à ces projections,
   - à générer les pixels à créer de la pseudo-trame intermédiaire (28) par filtrage vertical (6) de la trame intermédiaire vraie de la séquence d'images animées (5) pour les pixels n'ayant pas d'attribution ou par interpolation en fonction du vecteur mouvement calculé pour les pixels ayant un vecteur mouvement attribué (3, 4).

2. Procédé de désentrelacement selon la revendication précédente , caractérisé en ce que le calcul du vecteur attribué est effectué en choisissant le vecteur minimisant la différence inter image déplacée DFD (pour Displaced Frame Difference en langue anglaise) dans le cas où il existe plusieurs vecteurs relatifs à ces projections.

3. Procédé selon la revendication 1 ou 2, caractérisé en ce que les pixels de la trame courante (to + 40 ms) sont étiquetés "normal", "occluant" ou "découvert" en fonction de la projection du champ de vecteurs mouvement de la trame précédente sur la trame courante et en ce que les vecteurs mouvement de la trame précédente projetés sont ceux correspondant aux pixels étiquetés "normal" et "occluant" de la trame courante.

4. Procédé selon la revendication 1 ou 2, caractérisé en ce que la génération des pixels (8) est forcée par filtrage vertical lorsqu'ils correspondent à une zone découverte, cette zone étant définie à partir de l'étiquetage de la trame courante (to + 40 ms) (23) et de la trame intermédiaire vraie (to + 20 ms) (22).

5. Procédé selon l'une des revendications précédentes, caractérisé en ce que lorsque la non attribution d'un vecteur à un pixel est due à l'écart angulaire entre les vecteurs, le mode spatial est forcé pour les pixels adjacents.

6. Procédé selon l'une quelconque des revendications précédentes, caractérisé en ce qu'il consiste :

- à affecter à chaque point d'une grille de la pseudo-trame intermédiaire dont la définition correspond à la précision obtenue de la projection des vecteurs mouvement, un indicateur de validité de valeur différente selon que le point correspond à la projection d'un seul vecteur mouvement ou de plusieurs vecteurs mouvement voisins, à aucune projection de vecteurs mouvement, à la projection de plusieurs vecteurs mouvement non voisins, le voisinage de vecteurs étant défini par des différences dans leurs composantes inférieures à un certain seuil déterminé,

- à attribuer aux points de la grille, dans le cas où ils correspondent à un vecteur mouvement ou plusieurs vecteurs mouvement voisins, respectivement ce vecteur ou le vecteur minimisant la différence inter image déplacée DFD (pour Displaced Frame Difference en langue Anglaise).

7. Procédé selon la revendication 6, caractérisé en ce que l'indicateur de validité d'un point de la grille est forcé dans la position "vecteurs non voisins" en fonction de l'écart angulaire des vecteurs mouvement attribués aux points de la grille se trouvant dans un bloc de dimension déterminée et centré sur le point considéré.

8. Procédé selon la revendication 6 ou 7, caractérisé en ce que la détermination de l'indicateur de validité (25) et du vecteur mouvement (26) attribué à un pixel à construire de la pseudo-trame intermédiaire (to + 20 ms) prend en compte les indicateurs de validité affectés et les vecteurs mouvements attribués aux points de la grille appartenant à une fenêtre centrée autour de ce pixel, la présence dans cette fenêtre d'au moins un indicateur dans la position "vecteurs non voisins" générant un indicateur de "calcul de vecteur non fiable", la présence de plusieurs vecteurs attribués entraînant la sélection de celui minimisant la DFD.

9. Procédé selon l'une quelconque des revendications précédentes pour la génération d'une séquence d'images progressives, caractérisé en ce qu'il consiste à ajouter les lignes de la pseudo-trame intermédiaire (28) à celles de la trame intermédiaire vraie (5), puis à effectuer un filtrage haute fréquence (29) sur l'image entière progressive obtenue.

**Patentansprüche**

1. Verfahren zum Entschachteln einer sich bewegenden Bildfolge mit Halbbildern der Parität eines ersten Typs (1, 2), die mit Halbbildern der Parität eines zweiten Typs (5) verschachtelt sind, mit einer Bewegungsschätzung zwischen dem vorangehenden Halbbild (t0) und dem laufenden Halbbild derselben Parität (t0 + 40 ms), um dem vorangehenden Halbbild (t0) ein Feld von Bewegungsvektoren zuzuordnen, und mit einer Projektion (18) von Bewegungsvektoren des vorangehenden Halbbilds (t0) in ihrer Richtung auf ein zu bildendes Zwischen-Halbbild (t0 + 20 ms) oder ein Pseudo-Halbbild, enthaltend folgende Schritte:

- Zuordnen eines Vektors zu einem Pixel des zu bildenden Zwischen-Pseudo-Halbbilds, wenn die Anzahl der Projektionen der Vektoren auf dieses Pseudo-Halbbild und in einer vorbestimmten Umgebung des Pixels größer als oder gleich eins ist, und wenn, sofern diese Anzahl größer als eins ist, die Winkelabweichung zwischen den Bewegungsvektoren relativ zu diesen Projektionen unterhalb eines Schwellwerts liegt,
- Berechnen dieses Vektors, sofern er zugeordnet wird, in Abhängigkeit von dem Vektor oder den Vektoren relativ zu diesen Projektionen,
- Erzeugen der zu bildenden Pixel des Zwischen-Pseudo-Halbbilds (28) durch eine vertikale Filterung (6) des echten Zwischen-Halbbilds der sich bewegenden Bildfolge (5) für diejenigen Pixel, die keine Zuordnung erfahren, oder durch Interpolation in Abhängigkeit von dem berechneten Bewegungsvektor für diejenigen Pixel, die einen zugeordneten Bewegungsvektor (3, 4) aufweisen.

2. Verfahren zum Entschachteln nach dem vorangehenden Anspruch, dadurch gekennzeichnet, daß das Berechnen des zugeordneten Vektors dadurch erfolgt, daß der Vektor gewählt wird, der die Differenz zwischen dem versetzten Bild DFD (für Displaced Frame Difference in der englischen Sprache) in dem Fall minimiert, wo mehrere Vektoren für diese Projektionen bestehen.

3. Verfahren nach Anspruch 1 oder 2, dadurch gekennzeichnet, daß die Pixel des laufenden Halbbilds (t0 +40 ms) in Abhängigkeit von der Projektion des Feldes von Bewegungsvektoren des vorangehenden Halbbilds auf das laufende Halbbild mit "normal", "verdeckt" oder "aufgedeckt" etikettiert werden und daß die Bewegungsvektoren des vorangehenden Halbbilds auf diejenigen projiziert werden, die den mit "normal" und "verdeckt" etikettierten Pixeln des laufenden Halbbilds entsprechen.

4. Verfahren nach Anspruch 1 oder 2, dadurch gekennzeichnet, daß die Erzeugung der Pixel (8) durch vertikale Filtrierung bewirkt wird, wenn sie einem aufgedeckten Bereich entsprechen, wobei dieser Bereich am Ausgang der Etikettierung des laufenden Halbbilds (tO + 40 ms) (22) und aus dem echten Zwischen-Halbbild (tO + 20 ms) (22) ermittelt wurde.

5. Verfahren nach einem der vorangehenden Ansprüche, dadurch gekennzeichnet, daß, wenn die Nicht-Zuordnung eines Vektors zu einem Pixel auf eine Winkelabweichung zwischen den Vektoren zurückzuführen ist, der räumliche Modus durch die angrenzenden Pixel ausgelöst wird.

6. Verfahren nach einem der vorangehenden Ansprüche, gekennzeichnet durch folgende Schritte:

- bei jedem Punkt eines Gitters des Zwischen-Pseudo-Halbbilds, dessen Auflösung der von der Projektion der Bewegungsvektoren erhaltenen Genauigkeit entspricht, wird ein Gültigkeitsindikator mit einem unterschiedlichen Wert gebildet, je nachdem, ob der Punkt der Projektion eines einzigen Bewegungsvektors oder mehrerer benachbarter Bewegungsvektoren entspricht, bei irgendeiner Projektion der Bewegungsvektoren, bei der Projektion der nicht benachbarten Bewegungsvektoren, wobei die Nachbarschaft der Vektoren definiert ist durch die Differenzen ihrer unteren Komponenten zu einem bestimmten vorbestimmten Schwellwert,
- den Punkten des Gitters wird in dem Fall, wo sie einem Bewegungsvektor oder mehreren benachbarten Bewegungsvektoren entsprechen, jeweils dieser Vektor zugeteilt oder der Vektor, der die Differenz zwischen dem versetzten Bild DFD (für Displaced Frame Difference in der englischen Sprache) minimiert.

7. Verfahren nach Anspruch 6, dadurch gekennzeichnet, daß der Gültigkeitsindikator eines Punktes des Gitters in die Lage "nicht benachbarte Vektoren " gebracht wird in Abhängigkeit von der Winkelabweichung der Bewegungsvektoren, die den Punkten des Gitters zugeordnet sind, das sich in einem Block befindet, der eine vorbestimmte Abmessung aufweist und auf den betrachteten Punkt zentriert ist.

8. Verfahren nach Anspruch 6 oder 7, dadurch gekennzeichnet, daß die Bestimmung des Gültigkeitsindikators (25) und des Bewegungsvektors (26), der einem zu bildenden Pixel des Zwischen-Pseudo-Halbbilds (tO + 20 ms) zugeordnet ist, die gebildeten Gültigkeitsindikatoren und die zugeordneten Bewegungsvektoren bei den Punkten des Gitters berücksichtigt, das zu einem Fenster gehört, das um dieses Pixel herum zentriert ist, wobei die Anwesenheit wenigstens eines Indikators in diesem Fenster in der Lage "nicht benachbarte Vektoren" einen Indikator für "Berechnung des nicht zuverlässigen Vektors" erzeugt, wobei die Anwesenheit von mehreren zugeordneten Vektoren die Auswahl desjenigen auslöst, der das DFD minimiert.

9. Verfahren nach einem der vorangehenden Ansprüche zum Erzeugen einer Folge von progressiven Bildern, dadurch gekennzeichnet, daß die Zeilen des Zwischen-Pseudo-Halbbilds (28) denen des echten Zwischen-Halbbilds (5) hinzugefügt werden und dann eine hochfrequente Filterung (29) für das gesamte erhaltene progressive Bild erfolgt.

## Claims

1. Process for deinterlacing a sequence of moving images composed of frames with parity of a first type (1, 2) interlaced with frames with parity of a second type (5), carrying out motion estimation between the preceding frame (to) and the current frame of like parity (to + 40 ms) in order to allocate a motion vector field to the preceding frame (to), carrying out a projection (18) in their direction, onto an intermediate frame (to + 20 ms) to be constructed or pseudo-frame, of the motion vectors of the preceding frame (to), the process consisting:

- in allocating a vector to a pixel of the intermediate pseudo-frame to be created if the number of projections of the vectors onto this pseudo-frame and in a predefined environment of the pixel is greater than or equal to one, and if, when this number is greater than one, the angular deviation between the motion vectors relating to these projections is less than a threshold,
- in calculating this vector, when allocated, as a function of the vector or vectors relating to these projections,
- in generating the pixels to be created of the intermediate pseudo-frame (28) by vertical filtering (6) of the true intermediate frame of the moving image sequence (5) for the pixels having no allocation, or by interpolation as a function of the motion vector calculated for the pixels having an allocated motion vector (3, 4).

2. Process for deinterlacing according to the previous claim, characterized in that the allocated vector is calculated by choosing the vector which minimizes the displaced inter-image difference DFD (standing for Displaced Frame Difference) in the case where there are several vectors relating to these projections.

3. Process according to Claim 1 or 2, characterized in that the pixels of the current frame (to + 40 ms) are tagged as "normal", "occluding" or "uncovered" depending on the projection of the motion vector field of the preceding frame onto the current frame and in that the projected motion vectors of the preceding frame are those corresponding to the pixels tagged as "normal" and "occluding" of the current frame.

4. Process according to Claim 1 or 2, characterized in that the generation of the pixels (8) is forced by vertical filtering when they correspond to an uncovered zone, this zone being defined on the basis of the tagging of the current frame (to + 40 ms) (23) and of the true intermediate frame (to + 20 ms) (22).

5. Process according to one of the preceding claims, characterized in that, when the non-allocation of a vector to a pixel is due to the angular deviation between the vectors, the spatial mode is forced for the adjacent pixels.

6. Process according to any one of the preceding claims, characterized in that it consists:

   - in assigning to each point of a grid of the intermediate pseudo-frame whose definition corresponds to the accuracy obtained of the projection of the motion vectors, a validity indicator of different value depending on whether the point corresponds to the projection of a single motion vector or of several neighbour motion vectors, to no projection of motion vectors, to the projection of several non-neighbour motion vectors, the neighbouring of vectors being defined by differences in their components below a certain specified threshold,
   - in allocating to the points of the grid, in the case or they correspond to a motion vector or several neighbour motion vectors, respectively this vector or the vector minimizing the displaced inter-image difference DFD (standing for Displaced Frame Difference).

7. Process according to Claim 6, characterized in that the validity indicator of a point of the grid is forced into the "non-neighbour vectors" setting depending on the angular deviation of the motion vectors allocated to the points of the grid lying in a block of specified size centred on the relevant point.

8. Process according to Claim 6 or 7, characterized in that the determination of the validity indicator (25) and of the motion vector (26) allocated to a pixel to be constructed of the intermediate pseudo-frame (to + 20 ms) takes into account the validity indicators assigned and the motion vectors allocated to the points of the grid belonging to a window centred about this pixel, the presence in this window of at least one indicator in the "non-neighbour vectors" setting generating an "unreliable vector calculation" indicator, the presence of several allocated vectors engendering the selection of the one minimizing the DFD.

9. Process according to any one of the preceding claims, for the generation of a sequence of progressive images, characterized in that it consists in adjoining the lines of the intermediate pseudo-frame (28) to those of the true intermediate frame (5), and in then performing a high-frequency filtering (29) on the progressive complete image obtained.

t0   t0+20   t0+40   t0+60

image 1   image 2

trame 1   trame 2   trame 1   trame 2

images
entrelacées

images
progressives

lignes estimées

lignes existantes

image 1   image 2   image 3   image 4

FIG.1

EP 0 677 228 B1

trame 1

images
entrelacées

t0 — 1

trame 2

t0+20 — 5

organe d'interpolation
compensée par le
mouvement — 3

trame 1

t0+40 — 2

trame comp. — 4

filtrage spatial
vertical — 6

trame filtrée — 7

commutation — 8

filtrage
passe-bas
vertical — 9

lignes
existantes

lignes
estimées

t0+20 — 10
image progressive

FIG.2

EP 0 677 228 B1

FIG. 3

FIG.4

trame 1

trame 1

images
entrelacées

mvt en x

mvt en x
projeté

mvt en y

mvt en y
projeté

delta t=40ms

delta t=20ms

t0

1

t0+40

2

11

12

organe d'interpolation
compensée par le
mouvement

3

images
progressives

lignes existantes

lignes estimées

t0+20

10

EP 0 677 228 B1

13

FIG.5

trame t0-40  13

trame t0  14

trame t0+40  15

mvt x,y t0-40,t0  16

mvt x,y t0,t0+40  17

projection intermédiaire au 1/4 de pixel  18

projection temporelle (pixel entier)  19

mvt x, y projeté t0+20  20

image mvt valide  21

labels prec. t0  22

labels courants t0+40  23

EP 0 677 228 B1

col c-1    colonne c    col c+1

ligne L-1

fenêtre de recherche
d'un vecteur mvt

ligne L

ligne L+1

□ point correspondant au pixel entier dans la trame = point à estimer

⬚ point correspondant au 1/2 pixel dans la trame

⬚ point correspondant au 1/4 de pixel dans la trame = point de projection
du mouvement

# FIG.6

FIG.7

FIG. 8

colonne c

image im

l - 6

l - 5      lignes de la trame vraie

l - 4

l - 3

l - 2

l - 1      lignes de la pseudo-trame

l

point courant à filtrer

l + 1

l + 2

l + 3

l + 4

l + 5

l + 6

# FIG.9